(19) Europäisches Patentamt / European Patent Office / Office européen des brevets

(11) **EP 2 733 458 B1**

(12) # EUROPÄISCHE PATENTSCHRIFT

(45) Veröffentlichungstag und Bekanntmachung des Hinweises auf die Patenterteilung:
**24.10.2018  Patentblatt 2018/43**

(51) Int Cl.:
**G01B 11/02** *(2006.01)*    **G01B 11/30** *(2006.01)*
**F27B 21/00** *(2006.01)*

(21) Anmeldenummer: **14154848.7**

(22) Anmeldetag: **19.05.2009**

(54) **VERFAHREN UND VORRICHTUNG ZUR SINTERUNG EINES OBJEKTES UNTER BESTIMMUNG DES GEOMETRISCHEN OBERFLÄCHENPROFILS DES OBJEKTES**

METHOD AND DEVICE FOR SINTERING AN OBJECT WHILE DETERMINING THE GEOMETRIC SURFACE PROFILE OF THE OBJECT

PROCÉDÉ ET DISPOSITIF POUR FRITTER UN OBJET EN DÉTERMINANT LE PROFIL GÉOMÉTRIQUE DE SURFACE DE L'OBJET

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **19.05.2008   DE 102008024731**

(43) Veröffentlichungstag der Anmeldung:
**21.05.2014   Patentblatt 2014/21**

(62) Dokumentnummer(n) der früheren Anmeldung(en) nach Art. 76 EPÜ:
**09749827.3 / 2 283 308**

(73) Patentinhaber: **BAM Bundesanstalt für Materialforschung und -prüfung**
**12205 Berlin (DE)**

(72) Erfinder:
• **Marzok, Ulrich**
  **13125 Berlin (DE)**

• **Müller, Ralf**
  **12559 Berlin (DE)**
• **Schadrack, Reinhard**
  **15370 Petershagen (DE)**
• **Krauhausen, Michael**
  **52066 Aachen (DE)**

(74) Vertreter: **Zimmermann & Partner Patentanwälte mbB**
**Postfach 330 920**
**80069 München (DE)**

(56) Entgegenhaltungen:
EP-A- 0 506 005     WO-A1-02/16866
DE-A1- 10 309 544   GB-A- 1 228 480
US-A- 4 339 664     US-A- 4 588 297
US-A- 6 046 812     US-A1- 2005 081 602
US-B1- 6 369 401

EP 2 733 458 B1

**Beschreibung**

Die Erfindung betrifft ein Verfahren und eine Vorrichtung zur Sinterung eines Objektes, insbesondere von keramischen oder pulvermetallurgischen Bauteilen. Insbesondere erfolgt die Sinterung unter zeitlich aufgelöster Erfassung von Oberflächendaten sowie optional mittels Temperaturmessung in einem Hochtemperaturofen auf Grundlage optischer Messmethoden. Speziell können die Lasertriangulation zur Bestimmung der Geometrie des Objektes und die Pyrometrie zur Bestimmung der Verteilung der Oberflächentemperatur verwendet werden.

Pulvermetallurgische und keramische Bauteile werden aus Ausgangspulvern zum großen Teil unter Zugabe von Wasser und organischen Hilfsstoffen geformt. Dabei kommen unterschiedlichste Formgebungsverfahren zum Einsatz. Nach dem Trocknen und Ausbrennen der Hilfsstoffe werden die porösen Formkörper, sogenannte Grünkörper, in einem anschließenden Brennprozess, dem Sintern, verdichtet und verfestigt.

Je nach gewähltem Formgebungsverfahren, zum Beispiel Spritzguss oder 3D-Printing, können Formen komplexer Geometrie sowie auch heterogen aufgebaute Bauteile, zum Beispiel keramische Multilayer Substrate mittels Tape Casting, Siebdruck- und Laminierverfahren, hergestellt werden. Die Sinterung von Bauteilen wird insbesondere für sehr harte, verschleißfeste und temperaturbeständige Materialien angewendet, da hier andere Formgebungsverfahren sehr teuer und aufwendig sind.

Die vielfältige Anwendung gesinterter Bauteile basiert neben ihren guten mechanischen und thermischen Eigenschaften auch auf der großen Vielfalt weiterer vorteilhafter Eigenschaften wie zum Beispiel der guten chemischen und Korrosionsbeständigkeit keramischer Werkstoffe, die auch eine gute Verträglichkeit mit lebendem Gewebe oder eine genau anpassbare Resorbierbarkeit von Knochenersatzmaterialien ermöglicht. Andere Anwendungen keramischer Werkstoffe resultieren aus ihren elektrischen Eigenschaften wie ihrer guten Isolation und speziellen ferro- oder dielektrischen Eigenschaften.

Die große Breite einstellbarer Gefüge bzw. Eigenschaftskombinationen, die erreichbaren komplexen Bauteilgeometrien und die guten Kombinationsmöglichkeiten mit anderen Werkstoffen haben dazu geführt, dass keramische Werkstoffe oft eine Schlüsselrolle bei der Entwicklung neuer Produkte haben. Neben den klassischen Anwendungen keramischer Bauteile zum Beispiel als Heizelement, Isolator, Kugellager und als Dichtung kommen zunehmend auch medizinische Anwendungen, zum Beispiel als Ersatz für Knochen, Zähne und Gelenke, sowie Anwendungen in der Mikrosystemtechnik zum Tragen, wo keramische Werkstoffe den Aufbau komplexer Mehrlagenverdrahtungsträger mit vielfältigen integrierten Funktionalitäten ermöglichen. Solche Bauteile werden zum Beispiel zunehmend in der Automobilindustrie, der Informations- und der Medizintechnik eingesetzt. Insbesondere die modernen innovativen Anwendungen keramischer Werkstoffe stellen jedoch höchste Ansprüche an ihre Zuverlässigkeit - also die Streubreite der gewünschten Eigenschaften - sowie an die Präzision der Bauteilgeometrie.

Bei gesinterten Bauteilen sind Form und Größe sowie die erreichbaren Werkstoffeigenschaften und ihre Streubreite, untrennbar mit den Verfahren zu ihrer Herstellung verbunden. Es ist daher für die Güte des Endproduktes entscheidend, diese Prozesse so präzise wie möglich zu steuern. Diese Steuerung ist damit eine wesentliche Voraussetzung für die Markteinführung keramischer Bauteile und beeinflusst den heutigen technologischen Fortschritt auf entscheidende Weise.

Insbesondere bei Grünkörpern inhomogener Porosität, komplexer Geometrie oder mit heterogenem stofflichen Aufbau kann es zu lokalen Unterschieden bei des Verdichtung kommen. Das gesinterte Bauteil weicht dann nicht nur bzgl. der Größe sondern auch hinsichtlich seiner Form vom Grünkörper ab. Um solche Effekte zu korrigieren, werden heute zunehmend 3D-Sintersimulationstools, z.B. auf Basis von Finite Elemente Methoden, eingesetzt, um das 3D-Sinterverhalten vorherzusagen. Die gewonnenen Erkenntnisse können dann zum Beispiel dazu genutzt werden, die Form des Grünkörpers so einzustellen, das das gesinterte Bauteil die gewünschte Form annimmt.

Daneben kann es bei Grünkörpern inhomogener Porosität, komplexer Geometrie oder mit heterogenem stofflichen Aufbau auch zu temporären lokalen Unterschieden bei der Verdichtung kommen, die nicht an der Form des gebrannten Bauteils erkennbar sein müssen. So kann es zum Beispiel beim Sintern eines mehrlagigen Folienverbundes durch den unterschiedlichen Schrumpf zu vorübergehenden Verbiegungen kommen. Solche temporären Verwerfungen während des Sinterns oder auch nur die Ausbildung von Spannungen im Sinterkörper können später Gefüge-Inhomogenitäten wie zum Beispiel die Bildung von Fehlstellen im gebrannten Bauteil verursachen und so zum Bruch oder zu anderweitigem Versagen des Bauteils führen.

Die steigenden Anforderungen an die Präzision und Zuverlässigkeit gesinterter Bauteile machen daher neuartige Methoden zur prozessintegrierten bzw. In-situ-Steuerung des Sinterprozesses dringend notwendig, die auch geringste und komplexe Formänderungen sowie lokale Temperaturunterschiede auf der Oberfläche während der Sinterung präzise, d.h. bis in den $\mu$m-Bereich, erfassen können. Diese Informationen können dann zur Optimierung der Formkörperherstellung, zur Bewertung und Entwicklung von 3D-Sintersimulationstools oder zur Steuerung des Sinterprozesses selbst verwendet werden.

Im Regelfall laufen industrielle Sinterprozesse jedoch bislang ohne eine In-situ-Kontrolle der Schwindung ab, sie erfolgt nachträglich. Lediglich einzelne Messgrößen wie die Temperatur werden im Ofeninnenraum gemessen, ausgewertet oder als Steuergröße verwendet. Auch die Bewertung und Optimierung von 3D-Simulationstools, die ja den gesamten Sinterprozess vorhersagen können, basiert derzeit noch auf den messbaren Eigenschaften des fertig oder partiell gesinterten Bauteils.

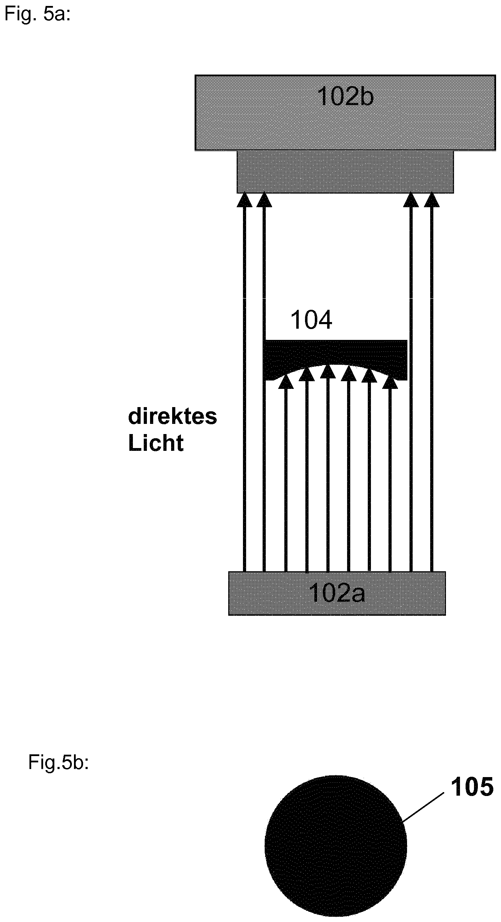

Zur In-situ-Kontrolle der Schwindung ist in der Forschung die Anwendung von optischen Schattenrissverfahren mittels Erhitzungsmikroskop und Bildauswertung bekannt, siehe zum Beispiel F. Raether, R. Springer, S.Beyer: Optical dilatometry for the control of microstructure development during sintering; Mat Res Innovat (2001) 4, p. 245-250. Fig. 5a zeigt das Prinzip des Schattenrissverfahrens des Standes der Technik. Eine Probe 104 mit einem beispielsweise kreisförmigen Querschnitt wird von einer Seite von einer Lichtquelle 102a bestrahlt. Im Beispiel weist die Probe 104 auf der der Lichtquelle 102a zugewandten Oberfläche eine mittige Vertiefung auf. Die Lichtquelle 102a bestrahlt die Probe 104 von einer Seite. Auf der dazu gegenüberliegenden Seite der Probe 104 ist eine CCD-Kamera als Detektor 102b angeordnet. Sie empfängt das an der Probe vorbeigehende Licht der Lichtquelle 104. Dort, wo die Probe 104 den Strahlengang zwischen Lichtquelle 102a und Detektor 102b blockiert entsteht ein Schatten der Probe 104 auf der CCD-Kamera 102b. Im Ergebnis, wie in Fig. 5b gezeigt, wird die Grundform der Probe 104 als Schattenriss erhalten. Im Beispiel ist dies lediglich ein undifferenzierter Kreis ohne Information über die Vertiefung der Oberfläche der Probe 104. Durch Schattenrissverfahren können lediglich zweidimensionale Schwindungsmessungen an kleinen, einfachen und insbesondere konvex gekrümmten Proben, z. B. einem 30 mm hohen Zylinder mit einem Durchmesser von 11 mm durchgeführt werden, wo der Schattenumriss hinreichende Informationen zur Probengestalt liefern kann. Da der Schattenriss die Projektion der Hell-Dunkel-Grenzlinie des Objektes auf die Beobachtungsebene darstellt, enthält er keine Information über den Abstand dieser Linie und so über den tatsächlichen räumlichen Verlauf und die Länge dieser Grenzlinie. Nur bei regelmäßig geformten Objekten und genau definierten Abbildungsverhältnissen, wie z.B. einer Kugel, kann indirekt aus dem Schattenriss auf das tatsächliche Oberflächenprofil des Objektes und seine räumliche Gestalt geschlossen werden. Der Begriff "indirekt" deutet hierbei an, dass bei diesem Verfahren Annahmen zur Objektgestalt gemacht werden müssen. Die Beschreibung unregelmäßiger Formänderungen, zum Beispiel die komplexen Verwerfungen großformatiger sinternder Folien, z.B. im Format 8"x8", ist mit dem Schattenrissverfahren nicht möglich.

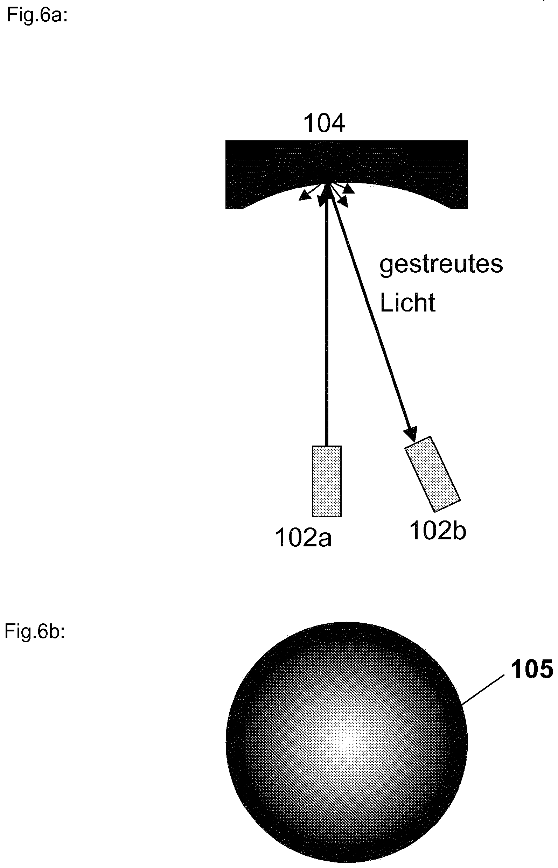

Im Zusammenhang mit anderen technischen, außerhalb der Sintertechnologie gelegenen Aufgabenstellungen sind berührungslose optische Verfahren zur In-situ-Erfassung der dreidimensionalen Geometrie von Körpern auch bei hohen Temperaturen bekannt. Diese beruhen auf dem Verfahren der Triangulation. Dabei wird meist ein Laser als Lichtquelle verwendet. Ein elektronischer Bildwandler, zumeist eine CCD-Kamera, registriert dann das gestreute Licht. Fig. 6a zeigt ein Beispiel für das Prinzip der Messung des gestreuten bzw. rückgestreuten Lichts. Wiederum wird eine kreisförmige Probe 104 mit einer Vertiefung in ihrer Oberfläche wie in Fig. 5a von einer Seite mit einer Lichtquelle 102a bestrahlt. Im Gegensatz zum Schattenrissverfahren sind nun Lichtquelle 102a und Detektor 102b auf der gleichen Seite der Probe 104 angeordnet, mit einem gewissen Abstand und/oder Winkel zueinander. Licht trifft auf die Probe 104, wird rückgestreut und gelangt in den Detektor 102b. Aus der Intensität des detektierten (rück-)gestreuten Lichts kann nun ein Oberflächenprofil der Probe 104 erstellt werden. Dies ist in Fig. 6b gezeigt und beinhaltet Informationen über die differenzierte Struktur der Oberfläche der Probe 104 mit Vertiefung.

US 4 588 297 A beschreibt ein Verfahren, wie in einem Hochofen der Füllstand des für die Schmelze zugeführten Schüttgutes mittels Triangulation bestimmt werden kann. Der Füllstand wird dabei mittels Pulsung eines Laserstrahls auf der Oberfläche bestimmt, während der Winkel des Emitters zur Oberfläche inkrementell entlang eines vorgegebenen Weges verändert wird. Das Streulicht wird dann mittels eines Detektors mit einem kleinen Öffnungswinkel gemessen. Detektor und Emitter sind dabei mit einem festen Abstand angeordnet. Punkte entlang des Profils werden von den Abstrahl- und Empfangswinkeln und der bekannten Distanz zwischen Emitter und Detektor bestimmt. Dazu befinden sich Laser und Lichtreceiver außerhalb des Ofens vor Beobachtungsfenstern. Da Laser und Receiver keine starr verbundene Einheit bilden, sondern getrennt am Ofen angebracht sind und der Einfallswinkel des Laserstrahls zur Bestimmung eines Profils in kleinen Winkelschritten bei der Messung verstellt wird, ist die Kalibrierung dieser Anordnung schwierig und außerdem sehr störanfällig, beispielsweise allein durch die thermische Ausdehnung mechanischer Komponenten der Sensorbefestigung während des Hei-zens. Dementsprechend ist die Messgenauigkeit der Anordnung sehr begrenzt.

JP 2001-099615 beschreibt einen wassergekühlten, mit grünem Laserlicht arbeitenden Triangulationssensor, der direkt in einem Hochtemperaturofen angeordnet ist. Als eine Anwendung wird die Messung der Oberfläche von eingeschüttetem Müllverbrennungsmaterial genannt. Verstellbare Parameter bei diesem Sensor sind, um die sichtbare Oberfläche eines Objektes messen zu können, die Neigung des Laserstrahls und die Neigung der optischen Achse des optischen Empfängers zu einer festen Koordinatenachse. Aus diesen variablen Stellwinkeln, den anderen festen geometrisch-optischen Parametern der Anordnung und den Bildkoordinaten der Abbildung des Laserflecks in der CCD-Kamera werden in einer Auswerteeinheit für jede Winkelstellung die 3D-Koordinaten des vom Laser angestrahlten Punktes der Objektoberfläche bestimmt. Allerdings existieren strenge physikalische Auflösungsgrenzen, die bei diskretem Kamerachip mit dem Abstand zwischen Messobjekt und Kamera und dem Winkel zwischen dem einfallenden Laserstrahl und der optischen Achse der Kamera zusammenhängen. Die diesem Verfahren eigene ständige Nachführung der Winkelstellungen zieht unterschiedliche Auflösungen nach sich und ist somit für hohe Genauigkeiten im μm-Bereich nicht geeignet. Bei dieser Anordnung und auch bei der zuerst genannten Messung in einem Hochofen wirkt sich außerdem der große Abstand zwischen der zu vermessenden Oberfläche und dem Detektor nachteilig auf die Genauigkeit aus.

Bei Raumtemperatur sind Anordnungen bekannt, bei denen gleichzeitig das Messobjekt gedreht und der optische Sensor linear über dem Messobjekt verschoben wird. So beschreibt US 5 270 560 A ein Verfahren, das zur Vermessung von Halbleiterwafern mit einem Lasersensor verwendet werden kann. DE 195 04 126 A1 beschreibt ein Verfahren zum Vermessen dreidimensionaler Objekte mit der optischen Triangulation, das bei der Schuhleistenvermessung, im Formenbau sowie bei orthopädischen, dentaltechnischen und archäologischen Anwendungen eingesetzt werden kann.

Jedoch gibt es bisher keine Möglichkeit zur direkten und hinreichend genauen quantitativen Erfassung von zwei- oder dreidimensionalen Oberflächenprofilen des Objektes und diesbezüglicher Änderungen während des Sinterprozesses bei hohen Temperaturen. Für die Kontrolle und Steuerung der Sinterung keramischer und pulvermetallurgischer Bauteile in einem Hochtemperaturofen gibt es noch kein Verfahren, das eine direkt zwei- oder dreidimensionale Formerkennung und Formanalyse während des Heizprozesses beinhaltet.

Daher ist es Aufgabe der Erfindung, eine Vorrichtung und ein Verfahren zur Sinterung keramischer und pulvermetallurgischer Bauteile anzugeben, mit der genaue Messungen von Oberflächenprofilen von sinternden Objekten durchgeführt werden können, bei denen die thermischen Verhältnisse im Ofen nur minimal beeinflusst werden.

Die Erfindung betrifft ein Verfahren gemäß Anspruch 1 und eine Vorrichtung gemäß Anspruch 12 zur kontrollierten Sinterung von Bauteilen, das auf der zeitlich aufgelösten Messung von Oberflächenprofilen bzw. daraus abgeleiteter Formmerkmalen beruht, welche aus dem direkt von der Probe gestreuten Licht gewonnen werden . Demzufolge kann während der Sinterung jeder Oberflächenpunkt in seiner Lage und seiner Temperatur vermessen werden und durch aufeinander folgende Messungen eine Veränderung festgestellt werden. Optional kann ferner die Temperatur der Oberfläche bestimmt werden. Die gemessene Veränderung erlaubt zudem eine Steuerung des Sinterregimes und/oder des zeitlichen Verlaufs der Temperaturverteilung über die gezielte Ansteuerung verschiedener Heizzonen.

Es wird demzufolge ein Verfahren zur Sinterung eines Objektes vorgeschlagen, umfassend die Schritte: Einbringen des Objektes in einen Hochtemperaturofen; Erhitzen des Ofens; Erstellen eines Oberflächenprofils mindestens eines Teilbereiches des Objektes mittels: Bestrahlen des Objektes mit Licht einer Lichtquelle; Detektieren des vom Objekt gestreuten Lichtes mit einem Detektor; Bestimmen des geometrischen Oberflächenprofils aus dem detektierten Licht. Während des Erstellens des geometrischen Oberflächenprofils kann optional gleichzeitig das thermische Oberflächenprofil mindestens eines Teilbereiches des Objektes bestimmt.

Ferner können Sinterparameter auf Basis der erhaltenen geometrischen und/oder thermischen Oberflächenprofile des Objektes gesteuert werden.

Unter geometrischen Oberflächenprofil werden im Folgenden zwei- oder dreidimensionalen Daten der Geometrie oder der Form der Oberfläche verstanden.

Bevorzugt wird die optische Lasertriangulation zur Bestimmung der Geometrie und die Pyrometrie zur Bestimmung der Verteilung der Oberflächentemperatur eingesetzt, d.h. das Strahlungsthermometer ist bevorzugt ein optisches Pyrometer. Das zu sinternde Objekt ist ein keramisches oder pulvermetallurgisches Objekt.

Die Menge der Sinterparameter umfasst: die lokale und globale Temperatur im Ofen, die globale Heizrate im gesamten Ofen, die lokale Heizrate einzelner Heizzonen im Ofen und die Zeitdauer einzelner Sinterungsschritte.

Eine Steuer- und Auswerteeinheit berechnet bevorzugt aus den gemessenen geometrischen und/oder thermischen Daten das geometrische und/oder thermische Oberflächenprofil des Objektes.

Zwischen aufeinander folgenden Bestimmungen des geometrischen und/oder thermischen Oberflächenprofils mindestens eines Teilbereiches des Objektes werden bevorzugt Veränderungen zwischen der Oberflächenprofilen bestimmt, auf deren Basis Sinterparameter gesteuert werden. Dies ermöglicht die Feststellung von Unregelmäßigkeiten während der Sinterung und ein darauf durchgeführtes Anpassen der Sinterparameter oder einen Abbruch des Verfahrens.

Die geometrischen Veränderungen umfassen vorteilhafterweise Schwindungen bzw. Schrumpfungen, die bei der Sinterung oft auftreten. Die Schwindungen des Objektes können aus der Verfolgung und Abstandsbestimmung zwischen vorbestimmten Punkten des Objektes aus zeitlich nacheinander erfolgenden Erfassungen des geometrischen Oberflächenprofils bestimmt werden.

Ferner kann das Verfahren umfassen: Bestimmung von Kenngrößen zur Formerkennung und Temperaturverteilung aus den gemessenen geometrischen und thermischen Oberflächenprofilen des Objektes, Durchführung eines Soll/Ist-Vergleiches der gemessenen Werte der Kenngrößen mit vorbestimmten Werten; Korrektur der Sinterparameter, wenn eine Abweichung der gemessenen Werte der Kenngrößen von vorbestimmten Werten größer ist als ein erster vordefinierten Schwellenwert; Fortführung der Bestimmung der geometrischen und thermischen Oberflächenprofile des Objektes und der Kenngrößen solange der Sinterungsprozess noch nicht abgeschlossen ist. Es kann auch ein Abbruch des Sintervorganges bei einer Abweichung der gemessenen Werte der Kenngrößen von vorbestimmten Werten, die größer ist als ein zweiter vordefinierten Schwellenwert, vorgesehen sein. Die Kenngrößen umfassen verschiedene Schwindungsmaße, wie z.B. die laterale und axiale Schwindung, geometrische Abweichungen und Temperaturunterschiede. Die Kenngrößen können die kleinsten und die größten gemessenen Temperaturwerte umfassen.

Der Winkel zwischen Lichtquelle und Detektor ist bevorzugt konstant, wodurch eine sehr genaue Messung erreicht wird.

Bevorzugt werden in einem Ausführungsbeispiel Lichtquelle und Detektor und/oder das Strahlungsthermometer über das Objekt bewegt. Noch bevorzugter werden Strahlungsthermometer sowie Lichtquelle und Detektor zusammen über das Objekt bewegt. Das Verfahren läuft bevorzugt derart ab, dass zunächst das Erstellen des geometrischen und/oder des thermischen Oberflächenprofils durch einen Spalt in der Wandung des Ofens erfolgt. Strahlungsthermometer, Lichtquelle und Detektor werden in lateraler Richtung entlang des Spaltes über das Objekt geführt. Gleichzeitig wird das Objekt im Ofen gedreht, wobei lineare und rotierende Bewegung synchronisiert erfolgen. Die lineare Bewegung kann durch ein Mittel zur linearen Positionierung erfolgen, welches entlang des Spaltes verschiebbar ausgebildet ist und an dem Lichtquelle, Detektor und Strahlungsthermometer in Bewegungsrichtung hintereinander angeordnet sind.

Die rotierende Bewegung erfolgt mittels eines Drehtellers, auf dem das Objekt angeordnet ist. Ein Translationsschritt entlang des Spaltes erfolgt bevorzugt nach einer vollständigen Rotation des Objektes. Lichtquelle, Detektor und Strahlungsthermometer können bevorzugt von einem äußeren Punkt des Drehtellers bis zum Rotationsmittelpunkt des Drehtellers bewegt werden. Dies ermöglicht die Neujustierung des Nullpunktes der Messung in z-Richtung, da auch die Oberfläche des Drehtellers mit vermessen wird.

Lichtquelle und Detektor sind durch einen Lasertriangulationssensor realisiert, der eine Laserlichtlinie auf die Oberfläche des Objektes abbildet und das von der Linie gestreute Licht in einem positionsempfindlichen Detektor detektiert.

Erfindungsgemäß umfasst der Schritt des Bestrahlens mit Licht ein Aufweiten des Lichtstrahls der Lichtquelle zu einer Linie. Dadurch kann die lineare Bewegung entlang des Spaltes entfallen.

Ferner kann in einem anderen Ausführungsbeispiel die Lichtquelle ein Projektor sein, der ein zweidimensionales Muster auf die Oberfläche des Objektes projiziert. Der Detektor kann durch mindestens eine Kamera realisiert sein, die das projizierte Muster aufnimmt. Das Verfahren umfasst dann ferner den Schritt des Bestimmens der Differenz zwischen projizierten und aufgenommenen Mustern.

Erfindungsgemäß ist ferner eine Vorrichtung zur Steuerung der Sinterung eines Objektes angegeben, umfassend: einen Hochtemperaturofen, in dem das Objekt aufgenommen und erhitzt wird, wobei in der Wandung des Ofens mindestens eine Öffnung ausgebildet ist; eine Lichtquelle und einen Detektor zur Detektion des von der Oberfläche gestreuten Lichtes, wobei Lichtquelle und Detektor derart im Außenbereich des Ofens angeordnet sind, dass durch die Öffnung das Oberflächenprofil des Objektes bestimmbar ist.

Ferner kann optional ein Mittel zur Bestimmung des thermischen Oberflächenprofils mindestens eines Teilbereiches des Objektes im Ofen vorgesehen sein. Bevorzugt ist das Mittel zur Bestimmung des thermischen Oberflächenprofils ein Strahlungsthermometer.

Ferner kann in einem weiteren Ausführungsbeispiel eine Auswerte- und Steuereinheit zur Auswertung der gemessenen geometrischen vorgesehen sein. Bevorzugt dient die Auswerte- und Steuereinheit auch zur Steuerung von Sinterparametern auf Basis dieser geometrischen und thermischen Daten.

Das Objekt ist bevorzugt ein keramisches oder pulvermetallurgisches Objekt.

Die Menge der steuerbaren Sinterparameter kann die lokale und globale Temperatur im Ofen, die globale Heizrate im gesamten Ofen, die lokale Heizrate einzelner Heizzonen im Ofen, und die Zeitdauer einzelner Sinterungsschritte umfassen.

Die Steuer- und Auswerteeinheit kann Schwindungsmaße, geometrische Abweichungen und/oder Temperaturunterschiede bestimmen, in deren Abhängigkeit die Sinterung gesteuert wird.

Der Winkel zwischen Lichtstrahl der Lichtquelle und optischer Achse des Lichtdetektors kann konstant sein, wodurch eine hohe Genauigkeit erreicht werden kann.

Das Strahlungsthermometer kann ein optisches Pyrometer sein.

Die Öffnung kann ein Spalt sein, Strahlungsthermometer, Lichtquelle und Detektor können an einem Mittel zur linearen Positionierung entlang des Spaltes verschiebbar angeordnet sein und im Ofen kann ein Mittel zur Rotation des Objektes derart ausgebildet sein, dass die Bewegung von Mittel zur linearen Positionierung und Mittel zur Rotation des Objektes synchronisiert erfolgt. Strahlungsthermometer, Lichtquelle und Detektor können in Bewegungsrichtung hintereinander am Mittel zur linearen Positionierung angeordnet sein. Das Mittel zur Rotation des Objektes ist ein mit Motor angetriebener Drehteller. Der Spalt kann mit einer temperaturbeständigen Scheibe abgedeckt sein, die das Licht der Lichtquelle ungehindert passieren lässt und für das Strahlungsthermometer transparent ist.

In einem ersten Ausführungsbeispiel können Lichtquelle und Detektor durch einen Lasertriangulationssensor realisiert sein, wobei die Strahlungsintensität des Lasers die des Objektes während der Sinterung übertrifft.

In einem anderen Ausführungsbeispiel kann die Lichtquelle ein Projektor sein, der ein zweidimensionales Muster auf die Oberfläche des Objektes projiziert und der Detektor kann mindestens eine Kamera sein, die das projizierte Muster aufnimmt.

Erfindungsgemäß wird ein Lichtstrahl der Lichtquelle zu einer Linie aufgeweitet und sind Lichtquelle und Detektor als Lichtschnittsensor ausgebildet.

Die hohe Genauigkeit der Bestimmung des Oberflächenprofils wird durch einen kleinen Messfleck der Lichtquelle, bevorzugt des Lasers, und einen kleinen Abstandsmessbereich - beides verbunden mit einer gewissen Nähe des Sensors zur Probe - sowie die Synchronisation der Relativbewegung zur Probe erreicht. Der Triangulationssensor wird direkt über dem Spalt in der Wandung des Ofens angeordnet.

Hauptanwendung sind zunächst Multilayer-Substrate aus Folien, an denen die Vorteile eines kontrollierten Sinterns nachgewiesen werden sollen.

Mit dem Verfahren und der Messanordnung kann erstmals ein Sinterprozess keramischer Bauteile unmittelbar verfolgt, kontrolliert und gesteuert werden. Dazu werden über die gesamte Prozessdauer die 3D-Daten und die Temperaturverteilung der Objektoberfläche aufgezeichnet. Eine spezielle Lösung dieser Aufgabe besteht darin, dass mit einem außerhalb des Ofens über einem sehr schmalen Spalt in der Ofendecke angeordneten Laser-Wegsensor oder Lasertriangulationssensor das Profil eines im Ofeninnenraum auf einem Drehteller befindlichen keramischen Messobjektes gemessen wird. Dieser Ansatz erfüllt vorteilhafterweise weitgehend die thermischen Anforderungen der Messaufgabe und ermöglicht eine große Messfläche bei einer sehr kleinen Sichtfläche.

Es werden sofort Fehlerereignisse, wie zum Beispiel die Verformung des Bauteils oder zu große Temperaturdifferenzen, erkannt. Der Sinterprozess kann in diesem Fall abgebrochen oder verlangsamt werden. Durch die permanente Aufzeichnung der Geometrie- und Temperaturdaten kann man zudem Rückschlüsse auf Fehlerursachen ziehen und somit den Ablauf des Sinterprozesses aber auch die vorangehende Herstellungstechnologie verbessern.

Aus den Geometriedaten werden dem Ofenbetreiber und Bauteilhersteller interessierende Schwindungsparameter - bei dünnen keramischen Folien die laterale und axiale Schwindungen - Damit lässt sich insbesondere die Heizungssteuerung in kritischen Temperaturbereichen optimieren.

Im Folgenden wird die Erfindung anhand von Ausführungsbeispielen unter Verwendung von Zeichnungen näher illustriert.

Es zeigen:

Fig. 1: Ein erfindungsgemäßes Ausführungsbeispiel der Vorrichtung zur Sinterung mittels 3D-Formerkennung und pyrometrischer Messung der Temperaturverteilung auf der Oberfläche des zu sinternden Objektes;

Fig. 2: Eine schematische Darstellung eines Ausführungsbeispiels der Bestimmung der lateralen Schwindung von Folien;

Fig. 3: Eine schematische Darstellung eines Ausführungsbeispiels der Bestimmung der axialen Schwindung;

Fig. 4: Ein Ausführungsbeispiel eines erfindungsgemäßen Verfahrens zur Steuerung der Sinterung mittels 3D-Formerkennung und pyrometrischer Messung der Temperaturverteilung auf der Oberfläche des zu sinternden Objektes;

Fig. 5: Prinzip des Schattenrissverfahrens des Standes der Technik (Fig. 5a: Aufbau; Fig. 5b: Messergebnis);

Fig. 6 Prinzip des Streulichtverfahrens des Standes der Technik (Fig. 6a: Aufbau; Fig. 6b: Messergebnis);

Der im folgende verwandte Begriff "geometrisches Oberflächenprofil" wird in Folgenden verwandt für zwei- oder dreidimensionale Daten der Oberfläche des Objektes. Es wird demnach die Form der Oberfläche oder mit anderen Worten, die räumliche Gestalt der Oberfläche durch diese Daten repräsentiert. Zum Beispiel können Oberflächendaten des Objektes entlang einer Linie oder aber die komplette dreidimensionale Oberflächenform des Objektes darunter fallen. Im zweidimensionalen Fall gibt das geometrische Oberflächenprofil beispielsweise die Abhängigkeit einer Höhen- oder Abstandskoordinate $z$ von einer räumlichen Koordinate $x$ an, also $z(x)$ und im dreidimensionalen Falle die Form der Oberfläche $z$ als eine Funktion zweier räumlicher Koordinaten, also z.B. $z(x,y)$. Im Folgenden sollen in diesem Zusammenhang verkürzt der Begriff "geometrisches Oberflächenprofil" oder "Geometrie der Oberfläche" verwandt werden.

Im Gegensatz dazu gibt das thermische Oberflächeprofil zusätzlich eine Temperaturinformation über das jeweilige geometrische Oberflächenprofil.

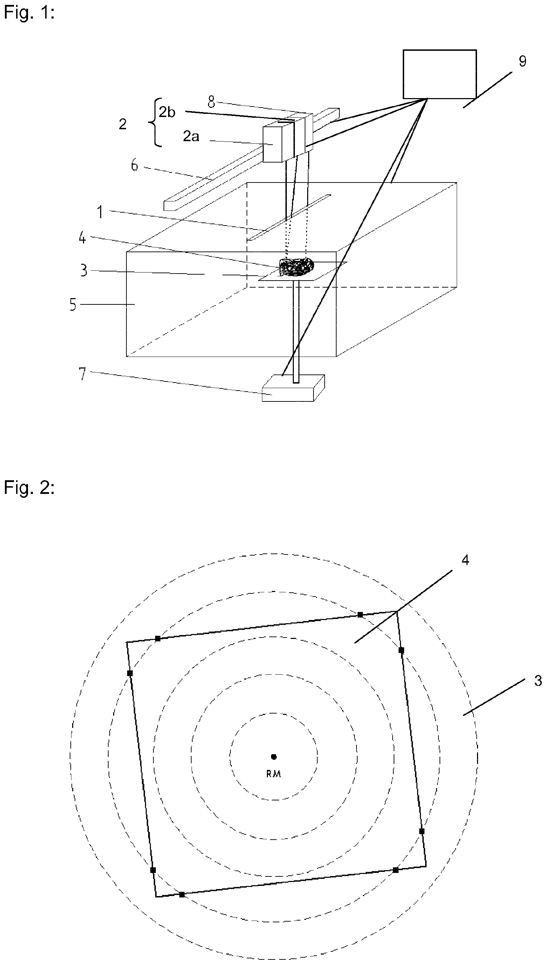

Fig. 1 zeigt ein Ausführungsbeispiel einer erfindungsgemäßen Vorrichtung zur Sinterung von Objekten 4, bevorzugt keramische oder pulvermetallurgische Objekte 4.

Sintern ist ein Prozess des Brennens und Konsolidierens von Körpern, die aus Pulverpartikeln geformt wurden. Die Sinterung wird sehr häufig von einer Schrumpfung begleitet. Die Pulver können sein: (a) *oxidische Pulver*, wie z.B. $Al_2O_3$ für Natriumdampflampen, $ZrO_2$ für bruchzähe Strukturkeramik, Gassensoren, $BaTiO_3$ für Kondensator- und Thermistorkeramik, $3Al_2O_3 \cdot SiO_2 + SiO_2 + K_2O \cdot 3Al_2O_3 \cdot SiO_2$ + Silikatglas für Porzellan; (b) *nichtoxidische Pulver*, wie z.B. SiC für hochfeste Strukturkeramik, $Si_3N_4$ für hochfeste und

bruchzähe Strukturkeramik; oder (c) *metallische Pulver,* wie z.B. WC + Co oder TiN, TiC + Ni, Co, Mo für Hartmetallbohrer oder Hartmetallwendeschneidplatten. Die vorliegende Anmeldung ist nicht auf die angegebenen Beispiele für keramische oder pulvermetallurgische Materialien beschränkt.

Die Vorrichtung zum Sintern gemäß dem ersten Ausführungsbeispiel umfasst einen Hochtemperaturofen 5, in dessen Wandung an einer Seite, bevorzugt der oberen Seite, eine Öffnung, bevorzugt ein Spalt oder Schlitz 1, eingebracht ist. Im Inneren des Ofens 5 befindet sich eine Aufnahme des zu sinternden Objektes 4. Diese Aufnahme ist als ein Drehteller ausgebildet, auf dem die zu sinternde Probe 4 angeordnet wird. Der Drehteller 3 ist dann mit einem externen Antrieb 7 versehen.

Über der Öffnung 1, bevorzugt aber nicht beschränkend dem Spalt 1, befindet sich eine Lichtquelle 2a und ein Lichtdetektor 2b zur Messung des von dem Objekt 4 gestreuten Lichtes und zur Abstandsbestimmung zur Oberfläche des Objektes 4. Lichtquelle 2a und Lichtdetektor 2b sind auf derselben Seite der Probe derart angeordnet, dass das direkt von der Objektoberfläche der Probe 4 zurückgestreute Licht der Lichtquelle 2a in den Detektor 2b fällt und somit Streulicht zur Bestimmung des Oberflächenprofils gemessen wird. Für den Begriff "rückgestreutes" Licht wird im folgenden vereinfacht "gestreutes" Licht verwendet. Bevorzugt werden Lichtquelle 2a und Detektor 2b oberhalb derselben Öffnung in einer Wandung des Ofens 5 angeordnet. Weiter bevorzugt sind Lichtquelle 2a und Detektor 2b auf einer Linie oder einem Kreisbogen oberhalb der Probe angeordnet. Die Lichtquelle 2a und der Detektor 2b sind in dem Ausführungsbeispiel durch einen Lasertriangulationssensor 2 realisiert. Der Triangulationssensor 2 ist mit einem Mittel zur linearen Positionierung, der Mikropositioniereinheit 6 verbunden. Optional ist in einem bevorzugten Ausführungsbeispiel auch ein Mittel 8 zur Bestimmung der Temperatur mindestens eines Teilbereiches der Oberfläche angeordnet. Dieses ist bevorzugt ein optisches Strahlungsthermometer oder optisches Pyrometer. Das Strahlungsthermometer 8 kann dann auch bevorzugt an dem Mittel 6 zur linearen Positionierung befestigt sein.

Die kombinierte Verwendung von Lasertriangulationssensor 2 und Mittel zur linearen Positionierung 6 ermöglicht die Messung eines geometrischen Oberflächenprofils des Objektes 4, der zwei- oder dreidimensionalen Koordinaten der Oberflächenpunkte des Objektes 4. Bevorzugt aber nicht beschränkend sind Triangulationssensor 2 und Strahlungsthermometer 8 in Reihe an der Mikropositioniereinheit 6 angeordnet, noch bevorzugter direkt an- und hintereinander, damit eine Messung der Temperatur des triangulierten Oberflächenpunktes des keramischen oder pulvermetallurgischen Objektes oder Probe 4 vorgenommen werden kann.

Die Mikropositioniereinheit 6 ist dabei so am Spalt 1 des Ofens 5 angeordnet, dass Triangulationssensor 2 und optional Strahlungsthermometer 8 über den Spalt zur vollständigen Vermessung der keramischen Probe 4 auf dem Drehteller 3 geführt werden können, also entlang seiner lateralen Ausdehnung Mit anderen Worten, das Abtasten der Probe 4 erfolgt in Richtung des Spaltes 1, die Mikropositioniereinheit 6 erstreckt sich entlang des Spaltes 1 und bewegt Triangulationssensor 2 und optional das Strahlungsthermometer 8 über den Spalt 1 und somit die Probe 4.

Der Spalt 1 in der Wandung des Ofens 5, bevorzugt in der Decke des Ofens 5, sollte, um thermische Probleme klein zu halten, möglichst schmal sein. Die Spaltdicke ist dabei bevorzugt kleiner gleich 5 mm. In seiner Länge entspricht der Spalt 1 mindestens der gesamten Länge der lateralen Ausdehnung des Objektes 4, bevorzugter mindestens der halben Länge der lateralen Ausdehnung. Der Spalt 1 ist so auszubilden, dass Strahlengänge von Triangulationssensor 2 und Pyrometer 8 den Spalt ohne Störung passieren können.

Bevorzugt kann die Öffnung 1 zur weiteren thermischen Abschirmung mit einer Quarzglasscheibe abgedeckt, die den vorkommenden Temperaturen standhält und gleichzeitig das Laserlicht für die Triangulation und die Wellenlänge für die pyrometrische Messung hindurchlässt. Der Öffnung 1 kann aber auch oval oder in anderer Form ausgebildet sein. Es muss nur sichergestellt sein, dass das Objekt 4 vermessen werden kann und dass die Querschnittsfläche der Öffnung 1 klein gegenüber der Oberfläche des Ofens 5 ist, damit die Temperatur im Ofen 5 regelbar bleibt und eine homogene Temperaturverteilung erreicht wird.

An der erfindungsgemäßen Vorrichtung ist ein Mittel zur Synchronisation von Rotationsbewegung des Drehtellers 3 und Translationsbewegung des Triangulationssensors 2 und des Strahlungsthermometers 8 vorgesehen. Dies kann ein mechanisches Mittel sein, ist aber bevorzugt durch eine Steuer- und Auswerteeinrichtung 9 realisiert. Die Steuer- und Auswerteeinheit 9 ist dabei mit dem Mittel zur Positionierung 6, dem Drehteller 3 bzw. seinem Antrieb 7, dem Lasertriangulationssensor 2 und dem Strahlungsthermometer 8 verbunden. In einer bevorzugten Ausgestaltung ist die Steuer- und Auswerteeinheit 9 ferner auch mit der Ofensteuerung des Ofens 5 verbunden. Damit kann der zeitliche Temperaturverlauf und die Höhe der Temperatur gesteuert werden, wie weiter unten näher erläutert wird. Ferner wertet die Steuer- und Auswerteeinheit 9 die gemessenen Daten des Triangulationssensors 2 und des Strahlungsthermometers 8 aus und erstellt ein dreidimensionales Oberflächenprofil des keramischen oder pulvermetallurgischen Objektes 4 sowie ein Temperaturoberflächenprofil des keramischen oder pulvermetallurgischen Objektes 4.

Der Drehtisch mit Drehteller 3 ist bevorzugt aus temperaturfestem Material gefertigt, das sich nicht verformt, wobei der Drehteller 3 eben ausgebildet ist.

Ein bevorzugter Lasertriangulationssensor 2 zeichnet sich neben seiner Präzision durch eine Laserintensität aus, die die Strahlungsintensität glühender Keramik übertrifft, damit er im Detektor 2b detektiert werden kann. Er ist somit für die Messung auch an heißen Keramikoberflächen geeignet. Der Laserstrahl und die optische Achse der Kamera bilden dabei bevorzugt einen konstanten Winkel. Durch die feste Winkeleinstellung erhält man vorteilhafterweise annähernd gleiche Messbedingungen für Abstände innerhalb des Messbereiches und einen Genauigkeitsvorteil gegenüber den zum Stand der Technik genannten Triangulationslösungen.

Die Bildebene des Triangulationssensors 2, der Kamerachip, ist dabei bevorzugt entsprechend der Scheimpflugbedingung angeordnet, so dass innerhalb des Messbereiches der Laserfleck scharf abgebildet wird. Die Scheimpflugsche Regel besagt, dass sich bei der Abbildung die Bild-, Objektiv- und Schärfeebene in einer gemeinsamen Schnittgeraden schneiden.

Die optischen Achsen von Strahlungsthermometer 8 und Triangulationssensor 2 sind dabei bevorzugt parallel zueinander ausgerichtet und haben in der dazu senkrecht erfolgenden radialen Translation r einen konstanten Versatz A, so dass leicht zueinander versetzte Punkte auf der Oberfläche des Objektes 4 vom Triangulationssensor bzw. Strahlungsthermometer 8 vermessen werden. Da der Versatz A konstant ist, kann dieser bei der Auswertung der gemessenen Daten herausgerechnet werden und somit einem Oberflächenpunkt des Objektes 4 eine Temperatur zugeordnet werden.

Der Temperaturbereich, in dem das Verfahren angewendet wird, erstreckt sich von Raumtemperatur bis 1000° C und darüber hinaus. Dabei tritt bereits eine beträchtliche Eigenstrahlung des keramischen oder pulvermetallurgischen Messobjektes 4 auf, deren Intensität aber durch die Laserintensität übertroffen wird.

Zur Erfassung eines Punktes auf der Oberfläche des keramischen oder pulvermetallurgischen Objektes 4 projiziert der Lasertriangulationssensor 2 einen Lichtpunkt auf die Oberfläche des keramischen Messobjektes 4 und bildet das (rück-)gestreute Licht über eine Optik in einem positionsempfindlichen Messelement oder Detektor 2b ab. Lichtquelle 2a und Detektor 2b sind in dem Triangulationssensor 2 integriert angeordnet.

Zur Erfassung der Oberflächengeometrie des keramischen oder pulvermetallurgischen Objektes 4 erfolgt die radiale Translation des außerhalb des Ofens befindlichen Lasertriangulationssensors 2 mit einer Mikropositioniereinheit 6, angeordnet über dem sehr schmalen geradlinigen Spalt 1 in der Ofendecke, in Richtung der Ausdehnung des Spaltes 1. Durch die lineare Translation des Lasertriangulationssensors 2, durch das Mittel zur linearen Positionierung 6, wird ein Höhenprofil des Messobjektes 4 in der Ebene, in der der Lichtstrahl der Lichtquelle 2a während der Translation verschoben wird, bestimmt.

Zur Erfassung eines gesamten dreidimensionalen Oberflächenprofils des keramischen oder pulvermetallurgischen Objektes 4 wird zudem gleichzeitig das Objekt winkelgenau rotiert. Dies geschieht mittels des unter dem Spalt oder Schlitz 1 angeordneten Drehtellers 3. Durch die Drehung des keramischen oder pulvermetallurgischen Messobjektes 4 entsteht aus den einzelnen Profilmessungen eine dreidimensionale Abbildung der Oberfläche der Messfläche. Dabei laufen die Bewegungen von radialer Positioniereinheit 6 und Rotation des Drehtellers synchronisiert ab.

Ohne Translation von Lichtquelle 2a, Detektor 2b und Strahlungsthermometer 8 sowie Rotation des Objektes 4 wird nur ein Punkt der Oberfläche "gescannt". Für manche Anwendungen kann schon die Aufnahme eines Teilprofils oder eines Teilbereiches der Oberfläche oder des Oberflächenprofils des Objektes 4 ausreichend sein, z.B. in einem für die Funktion des zu formenden Werkstückes kritischen Bereich oder am Ort einer Sollbruchstelle. Die erfindungsgemäße Erfassung eines Teilprofils der Oberfläche unterscheidet sich von bisher üblichen Schattenrissverfahren dadurch, dass direkt von der Probe gestreutes Licht verwendet wird. Dies erlaubt die Messung von Oberflächenprofilen auch in Bereichen, die nicht hinreichend durch den Schattenriss erfassbar sind, wie z.B. die Oberfläche nicht vollständig konvex geformter oder quaderförmiger Objekte oder die Erfassung komplexer Verwerfungen sinternder keramischer Folien. Für andere Anwendungen muss das gesamte Werkstück 4 während des Sinterns untersucht werden.

Ein vorteilhafter Effekt der Rotation des Drehtellers 3 ist die Kompensation von Temperaturunterschieden im keramischen oder pulvermetallurgischen Messobjekt 4, die durch Temperaturgradienten im Innenraum des Ofens 5 hervorgerufen werden.

Bevorzugt wird das keramische oder pulvermetallurgische Objekt 4 auf dem Drehteller 3 mit konstanter Winkelgeschwindigkeit gedreht, wobei der Triangulationssensor 2 kontinuierlich oder in kleinen diskreten Schritten Punkte auf der Oberfläche des keramischen Objektes 4 trianguliert. Gleichzeitig wird die Temperatur der Oberfläche des keramischen Objektes 4 durch das Strahlungsthermometer 8 gemessen. Nach einem Umlauf wird die radiale Positioniereinheit 6 um ein Inkrement radial verschoben, wodurch eine neue Bahn auf der Oberfläche des keramischen Objektes 4 von Strahlungsthermometer 8 und Triangulationssensor 2 vermessen wird. Radial wird der Triangulationssensor 2 vom Rand des keramischen Objektes 4 zum Rotationsmittelpunkt des Drehtellers 3 verschoben, wodurch die Oberfläche einmal vollständig vermessen wird.

Bevorzugt startet die radiale Translation und Vermessung am Rand des Drehtellers 3 oder zumindest vom Rand der Probe 4 auf dem Drehteller 3, damit die Nulllage des Drehtellers 3 immer wieder neu bestimmt werden kann. Die gemessenen geometrischen Daten des keramischen oder pulvermetallurgischen Messobjektes und der nicht durch das Messobjekt verdeckten Fläche des Drehtisches werden bevorzugt zunächst in Zylinderkoordinaten r, phi, z angegeben, wobei der Radius r und der Azimutwinkel phi die Koordinaten eines Punktes in einer Ebene (Polarkoordinaten) beschreiben und z die dazugehörige Höhe des Punktes senkrecht über oder unter der Ebene des Polarkoordinatensystems. Nach einer Koordinatentransformation bezieht sich die z-Koordinate des Messobjektes stets auf die Drehtischoberfläche (z = 0).

Die thermische Ausdehnung des Drehtisches ist somit in z-Richtung messtechnisch kompensiert.

Mit dem außerhalb des Ofens 5 über dem sehr schmalen geradlinigen Spalt 1 in der Ofendecke angeordneten optischen Pyrometer 8 wird das Temperaturprofil des auf dem Drehtisch 3 befindlichen keramischen oder pulvermetallurgischen Messobjektes 4 gemessen. Das optische Pyrometer 8 wird bevorzugt über dem Spalt 1 fest in Reihe zum Lasertriangulationssensor 2 an der gleichen Mikropositioniereinheit 6 angeordnet. Nach Herausrechnung des Abstands zwischen Triangulationssensor 2 und Pyrometer 8 ergibt sich für jeden Oberflächenpunkt P[r, phi, z] ein korrespondierender Temperaturwert T(r, phi, z). Damit ist die Objektoberfläche geometrisch und thermisch komplett beschrieben.

Das keramische oder pulvermetallurgische Messobjekt 4 wird während der kontinuierlichen Translationsbewegung des Sensors 2 und der Rotation des Drehtisches 3 gescannt. Vorteilhaft sind eine zusammengesetzte spiralförmige Bewegung oder eine Kreisbewegung mit einem Translationsschritt nach jeder Umdrehung. Aus einer vollständigen Abtastung der Objektoberfläche, zum Beispiel nach dem Durchlauf einer kompletten Spirale vom einem äußeren Punkt auf dem Drehtisch 3 bis zu seinem Rotationsmittelpunkt, wird die Oberfläche des Objekts im Rahmen der Schrittweiten von Translation und Rotation in einer Steuer- und Auswerteinheit berechnet.

Aus zeitlich nacheinander bestimmten Oberflächen oder auch Einzelmaßen, wie zum Beispiel eine Kantenlänge eines Bauteils, werden geometrische Änderungen des keramischen oder pulvermetallurgischen Messobjekts 4 bestimmt. Darunter sind Deformationen und Verwerfungen des Objekts sowie normale, für die Sinterung typische Schwindungen oder Schrumpfungen zu verstehen.

Natürlich kann auch zunächst eine Translationsbewegung über die Länge des Spalts vollständig durchgeführt werden, wodurch ein Schnitt des keramischen oder pulvermetallurgischen Objektes 4 gescannt wird, dem sich eine inkrementelle Winkeländerung und eine erneute Translation anschließen, solange bis die Oberfläche vollständig abgetastet wurde.

Die Oberfläche des keramischen oder pulvermetallurgischen Objektes 4 wird kontinuierlich während des Sinterns durch den Triangulationssensor 2 und das Strahlungsthermometer 8 gescannt, womit eine Veränderung der Oberfläche während des Sinterns 4 festgestellt werden kann.

Im folgenden wird beschrieben, wie die Schwindung während des Sinterns am Beispiel einer keramischen Folie berechnet werden kann. Dabei kommen dünne Keramikfolien im Format 8"x8" bevorzugt zum Einsatz. Jedoch ist die Vorrichtung nicht auf die Verwendung von Folien beschränkt, sondern es können vielmehr alle möglichen Formen und Größen, die der Ofen 5 aufnehmen kann, verwendet werden.

Wie in Fig.2 gezeigt, wird eine laterale Schwindung des keramischen Objektes 4 aus der Verfolgung und Abstandsbestimmung zwischen speziellen Punkten des keramischen Messobjektes P(r, phi), zum Beispiel Ecken und Randpunkte, bei denen sich die z-Koordinate sprunghaft ändert, bestimmt. Bei rechteckigen keramischen Folien lässt sich mit einem einzigen kreisförmigen Umlauf, wobei der Sensor alle Folienränder detektieren muss, ein umschreibendes Viereck berechnen. Aus zeitlich nacheinander erfolgten Berechnungen des umschreibenden Vierecks wird die laterale Schwindung der Folie bestimmt.

Die Ränder der keramischen Folie 4 stellen sich beim Messprozess mit dem Lasertriangulationssensor 2 als Sprung im Messsignal dar. Wenn man bei einer kreisförmigen Abtastung einer Folie 4 mit geradlinigen Rändern pro Folienseite zwei Sprünge detektiert, kann man daraus das umschreibende Viereck und seine Eckpunkte bestimmen. Aus dem Abstand benachbarter Eckpunkte des berechneten umschreibenden Vierecks folgen die Seitenlängen der keramischen Folie 4. Auch kann man bei der kreisförmigen Abtastung gleich einen Eckpunkt erfassen, was aber auf Grund diskreter Kreisradien bei der Messung schwierig ist. Der Punkt RM in Fig. 2 gibt den Rotationsmittelpunkt des Drehtisches an. Die laterale Schwindung zwischen zwei Zeitpunkten 1 und 2 berechnet sich dann beispielsweise aus der Änderung einer Seitenlänge der Folie:

$$S_{lateral} = (L_1 - L_2)/ L_1 \, .$$

Wenn der Zeitpunkt 1 der Startpunkt und der Zeitpunkt 2 das Ende des Sinterprozesses sind, ist $S_{lateral}$ folglich die laterale Gesamtschwindung der Folie 4.

Vorteilhafterweise ist die Bestimmung der lateralen Schwindung von Folien 4 bei nur einem Umlauf des Drehtellers 3 besonders schnell.

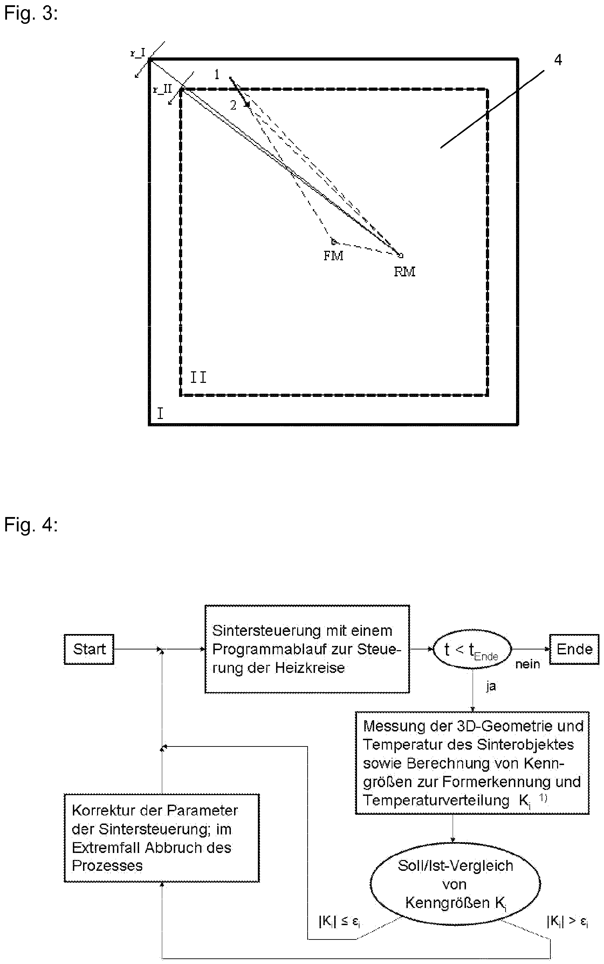

Die axiale Schwindung in Dickenrichtung der Folie wird aus der Messung der z-Koordinaten von fest mit der Folienoberfläche verbundenen Kontrollpunkten bestimmt, wie in Fig. 3 gezeigt. Der Begriff "axial" bezieht sich auf die Drehachse, um die das Objekt rotiert wird. Die r-phi-Koordinaten dieser ausgewählten Punkte müssen mit der lateralen Schwindung iterativ nachgeführt werden. Aus zeitlich nacheinander bestimmten z-Werten der numerierten Folienpunkte wird die axiale Schwindung bestimmt. Axial bedeutet hier die Schwindung in Richtung der Drehachse des Drehtellers 3, also die Schwindung des Objektes 4 in z-Richtung oder in seiner Dicke.

Bei der lateralen Schwindung, also in x- oder y-Richtung, der keramischen Folie 4 "wandert" ein auf der Folie fest verankerter Punkt unter bestimmten Annahmen im Koordinatensystem des Drehtisches 3 von Position 1 nach Position 2 (bei isotroper Schwindung entlang eines Strahls vom Folienmittelpunkt). Da der Punkt nicht "gesehen" wird, muss seine Position aus der lateralen Schwindung berechnet werden. Diese Position muss mit Sensortranslation und Winkelstellung des Drehtischs realisiert werden. Für die axiale Schwindung wird bei jeder neuen Punktposition mit dem Lasertriangulationssensor der Abstand, also die z-Koordinate, gemessen.

Die Markierung I und II in Fig. 3 symbolisieren dabei die Foliengröße zu zwei aufeinander folgenden Zeitpunkten. Der Punkt FM ist der Mittelpunkt der rechteckigen Folie 4, der Punkt RM gibt den Rotationsmittelpunkt des Drehtisches 3 an. Mit $r_I$ und $r_{II}$ werden unterschiedliche Kreisbahnen bei der Messung angedeutet, bei denen Eckpunkte oder Folienränder detektiert werden. Die axiale Schwindung zwischen zwei Zeitpunkten 1 und 2 berechnet sich aus der Änderung eines vertikalen Abstandsmaßes (Höhe, Dicke) - also der z-Koordinate eines festen Punktes auf der Folie:

$$S_{axial} = (z_1 - z_2)/z_1.$$

Wenn der Zeitpunkt 1 der Startpunkt und der Zeitpunkt 2 das Ende des Sinterprozesses sind, ist $S_{axial}$ folglich die axiale Gesamtschwindung der keramischen Folie 4.

Fig. 2 und 3 zeigen die Bestimmung der lateralen und axialen Schwindung von keramischen Folien 4. Die Schwindungen können aber für jede beliebige Form des Objektes berechnet werden, Fig. 2 und 3 beziehen sich lediglich auf ein Ausführungsbeispiel.

Bei strukturierten keramischen Objekten 4, beispielsweise mit gedruckten Leiterbahnen und Löchern, lassen sich lokale, räumlich inhomogene Schwindungsprozesse anhand der Größe und Lage dieser Merkmale zueinander quantitativ erfassen.

Erfindungsgemäß wird ein Lichtstrahl zu einer Linie aufgeweitet und auf das Objekt 4 gerichtet. Der aufgeweitete Lichtstrahl wird durch einen Laserlichtschnittsensor realisiert. Dabei ist vorteilhaft, dass der Laserstrahl beim Laserlichtschnittsensor zu einer Linie aufgeweitet wird und damit unmittelbar entlang dieser Linie das Profil bestimmt wird und somit eine nötige Translation von Lichtquelle 2a und Detektor 2b entfällt. Da aber das Laserlicht nur in der Ebene, die aus der optischen Achse der Laserprojektionseinheit und der optischen Achse der Kamera auf dem Kamerachip scharf abgebildet wird und auf Grund der Schärfentiefe und Linienbreite der Laserlinie zu den seitlichen Rändern in der Abbildung etwas an Schärfe verlieren kann, ergibt sich jedoch physikalisch eine geringere Auflösung gegenüber dem bevorzugten Lasertriangulationssensor. Der Laserlichtschnittsensor kann aber dennoch angewendet werden bei Sinterobjekten mit einer ausgeprägten Höhe mit z.B. Länge, Breite und Höhe etwa in einer Größenordnung. Bei sehr dünnen Folien mit Foliendicken, die beispielsweise viel kleiner als Länge und Breite sind, ist hingegen die Lasertriangulation bevorzugt.

In einem weiteren nicht gezeigten Ausführungsbeispiel kann das geometrische Oberflächenprofil mittels eines Streifenprojektionsverfahrens durchgeführt werden. Dabei wird in einem topometrischen Verfahren die Lichtquelle 2a durch einen Projektor als inverse Kamera realisiert und der Detektor 2b durch eine Kamera.

Dabei arbeitet der Projektor mit einer Leistung, die die vorhandene Strahlung der glühenden Oberfläche im Ofen 5 übertrifft. Für jede Kamera und Projektor wären jeweils eine Öffnung 1 im Ofen 5 erforderlich. Mit mehreren Kameras kann eine Stereoaufnahme der Oberfläche erfolgen. In einem weiteren bevorzugten Ausführungsbeispiel wird mittels der während des Sinterns kontinuierlich gemessenen geometrischen und/oder thermischen Daten der Oberfläche des Messobjektes durch den Triangulationssensor 2 bzw. das Strahlungsthermometer 8 der Sinterprozess gesteuert.

Die Steuerung der Sinterung kann dabei wie in Fig. 4 gezeigt ablaufen. Dabei werden bevorzugt verschiedene Heizzonen des Ofens 5 mittels separater Heizkreise separat oder gemeinsam gesteuert. Es kann aber auch allein die globale Temperatur im Ofen gesteuert werden.

Die Sinterung wird mit einer Steuerung der Sinterparameter durchgeführt. Die Sinterparameter umfassen dabei die lokale und globale Ofentemperatur, die Zeitdauer einzelner Sinterungsschritte sowie die lokale oder globale Heizrate $\Delta T/\Delta t$ im Ofen bzw. in Ofensegmenten oder Heizzonen, wobei $\Delta T$ die Änderung der Temperatur in einem Zeitintervall $\Delta t$ ist. Bei der Realisation der erfindungsgemäßen Vorrichtung mit Positioniereinheit 6 und Drehteller 3 können auch die Drehgeschwindigkeit des Drehtellers 3 und die Translationsgeschwindigkeit der Positioniereinheit 6 gesteuert werden. Ferner kann die Zeitdauer für einzelne Schritte der Sinterung oder die gesamte Sinterung gesteuert werden.

Erfindungsgemäß werden das geometrische und thermische Oberflächenprofil wenigstens eines Teilbereiches der Oberfläche des Objektes 4 zur Steuerung der Sinterung verwendet. Nach dem Einbringen des Objektes 4 in einen Hochtemperaturofen 5 wird der Ofen erhitzt. Es wird dann das dreidimensionale geometrische Oberflächenprofil mindestens eines Teilbereiches des Objektes 4 erstellt, wobei Licht einer Lichtquelle 2a einen Punkt auf der Oberfläche des Objektes bestrahlt, das gestreute Licht in einem Detektor 2b detektiert wird und daraus dann das geometrischen Oberflächenprofil bestimmt wird. Gleichzeitig wird das thermische Oberflächenprofil mindestens eines Teilbereiches des Objektes 4 mittels eines Strahlenthermometers 8 erstellt und diese Profile werden dann für die Steuerung der Sinterparameter eingesetzt.

Es wird dabei bevorzugt die komplette Oberfläche des keramischen Objektes 4 wie oben beschrieben kontinuierlich gescannt. Ist die vorgegebene Zeitdauer der Sinterung überschritten, wird der Prozess abgebrochen, sonst wird er weiter durchgeführt. Zur Kontrolle der Sinterung werden bevorzugt Kenngrößen zur Formerkennung und Temperaturverteilung des keramischen oder pulvermetallurgischen Objektes 4 während des Sinterprozesses festgelegt, die z. B. Schwindungsmaße, geometrische Abweichungen und Temperaturdifferenzen umfassen. Diese Kenngrößen zur Formerkennung und Temperaturverteilung werden aus den gemessenen Geometrien und Temperaturen des keramischen oder pulvermetallurgischen Objektes 4 bestimmt. Dies geschieht bevorzugt in der Steuer- und Auswerteeinheit 9. Beispielsweise kann die laterale Schwindung wie oben dargelegt bestimmt werden.

Es wird nach jeder Kenngrößenbestimmung ein Soll/Ist-Vergleich der gemessenen Werte mit vorbestimmten Werten durchgeführt. Die Parameter der Sintersteuerung werden dann korrigiert, wenn der Betrag der Abweichung der gemessenen Werte der Kenngrößen $K_i$ von den vorbestimmten Werten größer ist, als ein erster vordefinierten Schwellenwert $\varepsilon_i$ für diese Kenngröße. Die Bestimmung der Geometrien und Temperaturen des keramischen oder pulvermetallurgischen Objektes 4 zur neuen Bestimmung von Kenngrößen zur Formerkennung und Temperaturverteilung wird dann fortgeführt, wenn eine Abweichung der gemessenen Werte der Kenngrößen $K_i$ von den vorbestimmten Werten kleiner ist als der erste vordefinierten Schwellenwert oder eine Korrektur erfolgt ist und gleichzeitig der Sinterungsprozess noch nicht abgeschlossen ist. Wird zum Beispiel eine lokale Verwerfung erkannt, wird die Heizleistung eines oder mehrerer Heizzonen reduziert, das heißt die Heizrate $\Delta T/\Delta t$ verringert. Das gleiche trifft auch für Schwindungsmaße zwischen zwei aufeinander folgenden Messungen zu, die einen Schwellenwert übersteigen, oder der maximale Temperaturunterschied auf der Oberfläche ein zulässiges Maß überschreitet. Werden nachhaltig keine auffälligen Formänderungen oder Temperaturunterschiede festgestellt, können die Heizraten der einzelnen Heizzonen auch koordiniert erhöht werden.

Es kann auch ein zweiter Schwellenwert für die betreffende Kenngröße $K_i$ festgelegt werden, der größer ist als der erste Schwellenwert, bei dem bei Überschreiten des Schwellenwertes die Sinterung komplett abgebrochen wird. Das Sinterprogramm wird bei normalem Verlauf nach Ablauf der vorbestimmten Zeit beendet.

Mit der Oberflächentemperatur des keramischen oder pulvermetallurgischen Objektes 4, zum Beispiel repräsentiert durch die kleinsten und die größten Temperaturwerte auf dessen Oberfläche, den Schwindungsparametern und/oder Temperaturwerten von zusätzlich im Ofeninnenraum angeordneten Thermoelementen wird die Heizung des Ofens 5 bei laufendem Betrieb mit der Auswerte- und Steuereinheit 9 geregelt und optimiert.

Der Prozess ist besonders wichtig für den Ofentemperaturbereich, in dem die Schwindungsprozesse im wesentlichen stattfinden. Beispielsweise schwinden Glasmatrixkomposite, bestehend aus Bariumalumoborosilicatglas- und $\alpha$-Al$_2$O$_3$-Pulvern hauptsächlich im Temperaturbereich von 700 bis 900° C.

Da ein Temperaturprofil der Oberfläche des keramischen oder pulvermetallurgischen Objektes 4 nach der Erfindung gemessen werden kann, kann dieses Temperaturprofil zur lokalen Steuerung der Heizkreise verwendet werden, damit das keramische Objekt 4 möglichst gleichförmig gebrannt wird. So kann z.B. ein Temperaturunterschied im Ofen 5 durch die Steuer- und Auswerteeinheit 9 mit der Änderung der Heizraten ausgeglichen werden. Außerdem kann bei beginnenden Verwerfungen das Temperaturprofil im Ofen 5 angepasst werden.

Ferner können die gemessenen Daten auch zur Steuerung der Translationsgeschwindigkeit von Sensor 2 und Strahlungsthermometer 8 sowie zur Einstellung der Rotationsgeschwindigkeit des Drehtellers 3 verwendet werden. Zu Beginn der Messung mag eine langsamere Bewegung ausreichend sein und gar nötig sein, da das keramische Objekt 4 noch nicht hinreichend fest ist. Im weiteren Verlauf, im Temperaturbereich der Schwindung, kann dann eine schnellere Geschwindigkeit zur schnelleren Messung der Veränderungen notwendig sein.

Während des laufenden Sinterprozesses - also prozessintegriert bzw. in-situ unter Hochtemperaturbedingungen - werden erstmals mit optischen Sensoren aus dem direkt vom Objekt gestreuten Licht mit der erforderlichen Genauigkeit kontinuierlich und zeitaufgelöst Oberflächenprofile des Bauteils sowie seine Temperaturverteilung gemessen. Mit Kenngrößen, die aus diesen Messungen bestimmt werden, werden der Sinterprozess oder vorangegangene technologische Schritte gesteuert. Fehler, wie die Deformation des zu sinternden Teils, werden sofort erkannt. Neben der Überwachung und Regelung von Routineprozessen können mit dieser Lösung Hersteiiungs- und Sinterverfahren für neue Werkstoffe entwickelt und optimiert werden.

Mit der Aufzeichnung aller geometrischen und thermischen Oberflächenparameter können Sinterprozesse von keramischen oder pulvermetallurgischen Hochleistungsbauelementen verfolgt, analysiert und der Ablauf der Sinterung korrigiert sowie gegebenenfalls gezielte Änderungen am Layout dieser Baugruppen vorgenommen werden.

Das angegebene Verfahren und die Vorrichtung ermöglichen zum ersten Mal eine zeitlich aufgelöste Vermessung eines keramischen oder pulvermetallurgischen Objektes 4 in allen 3D-Koordinaten inklusive der Kombination mit der örtlich und zeitlich aufgelösten Temperaturverteilung. Das trifft auch für die aus der kompletten Messung abgeleiteten Schwindungsparameter zu. Durch diese Messung kann der Sintervorgang präzise gesteuert werden oder aber vor zu großer Verformung der Ausgangsmaterialien abgebrochen werden.

Auch die Anwendung einzelner Elemente des oben beschriebenen Ausführungsbeispiels kann wesentliche Vorteile bei der Steuerung von Sinterprozessen ermöglichen. So liefert bereits die Erfassung eines fest angeordneten Linienprofils währen des Sintervorgangs wesentliche Informationen zum Sinterprozess, wie zum Beispiel die Folienbreite oder Anzeichen einer beginnenden Verwerfung. In diesem Fall kann auf die Verwendung einer rotierenden Probenaufnahme verzichtet werden. Ähnliches gilt für die Verwendung des Pyrometers. Das Linienprofil kann auch auf bestimmte kritische oder repräsentative Bereich des Objektes beschränkt werden. Derartig eingeschränkte Varianten des beschriebenen Verfahrens liefern zwar nur eingeschränkte Informationen, bieten aber dafür den Vorteil einer einfacheren Realisierbarkeit unter großtechnischen Bedingungen und geringere Kosten.

Bezugszeichenliste

| 1 | Öffnung |
|---|---|
| 2 | Mittel zur Bestimmung des dreidimensionalen geometrischen Oberflächenprofils |
| 2a | Lichtquelle |
| 2b | Detektor |
| 3 | Drehteller |
| 4 | Probe |
| 5 | Hochtemperaturofen |
| 6 | Positioniereinheit zur Translation der Sensoren über dem Spalt |
| 7 | Antrieb für Drehteller mit genauer Winkelpositionierung |
| 8 | Mittel zur Bestimmung des thermischen Oberflächenprofils |
| 9 | Steuer- und Auswerteeinheit |
| 102a | Lichtquelle |
| 102b | Detektor |
| 104 | Probe |
| 105 | Messergebnis |
| RM | Rotationsmittelpunkt |
| FM | Folienmittelpunkt |

**Patentansprüche**

1. Verfahren zur kontrollierten Sinterung eines keramischen oder pulvermetallurgischen Bauteils (4), umfassend die Schritte:

   - Anordnen des keramischen oder pulvermetallurgischen Bauteils (4) auf einem motorgetriebenen Drehteller in einem Hochtemperaturofen (5);
   - Erhitzen des Hochtemperaturofens (5) und Sintern des keramischen oder pulvermetallurgischen Bauteils im Hochtemperaturofen (5);
   - Drehen des keramischen oder pulvermetallurgischen Bauteils mit dem motorgetriebenen Drehteller;
   - Erstellen eines geometrischen Oberflächenprofils mindestens eines Teilbereiches des keramischen oder pulvermetallurgischen Bauteils (4) während des Sinterns des mit dem motorgetriebenen Drehteller gedrehten keramischen oder pulvermetallurgischen Bauteils (4) mittels:

      - Bestrahlen des mit dem motorgetriebenen Drehteller gedrehten keramischen oder pulvermetallurgischen Bauteils (4) mit Licht einer Lichtquelle (2a);

      und

      - Detektieren des vom gedrehten keramischen oder pulvermetallurgischen Bauteil (4) gestreuten Lichtes mit einem Detektor (2b);

      und

      - Bestimmen des geometrischen Oberflächenprofils aus dem detektierten Licht,

   wobei das Bestrahlen ein Aufweiten eines Lichtstrahls der Lichtquelle (2a) zu einer Linie umfasst und Lichtquelle (2a) und Detektor (2b) als Lichtschnittsensor (2) ausgebildet sind.

2. Verfahren nach Anspruch 1, wobei der aufgeweitete Lichtstrahl durch einen Laserlichtschnittsensor (2) realisiert ist, sodass das erstellte geometrische Oberflächenprofil zumindest ein Linienprofil umfasst.

3. Verfahren nach Anspruch 1 oder 2, ferner umfassend den Schritt:

   - Steuern der Sinterparameter auf Basis zumindest eines erstellten geometrischen Oberflächenprofils des keramischen oder pulvermetallurgischen Bauteils (4).

4. Verfahren nach einem der vorstehenden Ansprüche, ferner umfassend den Schritt:

   - Erstellen eines thermischen Oberflächenprofils mindestens eines Teilbereiches des keramischen oder pulvermetallurgischen Bauteils (4) während des Erstellens des geometrischen Oberflächenprofils.

5. Verfahren nach Anspruch 4, ferner umfassend den Schritt:

   - Steuern der Sinterparameter auf Basis des erstellten geometrischen und/oder thermischen Oberflächenprofile des keramischen oder pulvermetallurgischen Bauteils (4).

**6.** Verfahren nach einem der vorhergehenden Ansprüche, wobei das Erstellen des thermischen Oberflächenprofils mittels eines Strahlenthermometers (8) erfolgt.

**7.** Verfahren nach Anspruch 3 oder 5, wobei die Sinterparameter ausgewählt sind unter:
einer lokalen und globalen Temperatur im Hochtemperaturofen (5), einer globalen Heizrate im gesamten Hochtemperaturofen (5), einer lokalen Heizrate einzelner Heizzonen im Hochtemperaturofen (5) und einer Zeitdauer einzelner Sinterungsschritte.

**8.** Verfahren nach einem der vorhergehenden Ansprüche, wobei eine Steuer- und Auswerteeinheit (9) aus den bestimmten geometrischen und/oder thermischen Daten das geometrische und/oder thermische Oberflächenprofil des keramischen oder pulvermetallurgischen Bauteils (4) berechnet.

**9.** Verfahren nach einem der vorhergehenden Ansprüche, wobei zwischen aufeinander folgenden Bestimmungen des geometrischen und/oder thermischen Oberflächenprofils mindestens eines Teilbereiches des keramischen oder pulvermetallurgischen Bauteils (4) Veränderungen zwischen den Oberflächenprofilen bestimmt werden, auf deren Basis Sinterparameter gesteuert werden.

**10.** Verfahren nach einem der vorhergehenden Ansprüche, ferner umfassend:

- Bestimmen von Kenngrößen ($K_i$) zur Formerkennung und Temperaturverteilung aus den gemessenen geometrischen und thermischen Oberflächenprofilen des keramischen oder pulvermetallurgischen Bauteils (4),
- Durchführen eines Soll/Ist-Vergleiches der gemessenen Werte der Kenngrößen ($K_i$) mit vorbestimmten Werten;
- Korrigieren der Sinterparameter, wenn eine Abweichung der gemessenen Werte der Kenngrößen ($K_i$) von vorbestimmten Werten größer ist als ein erster vordefinierten Schwellenwert ($\varepsilon_i$):
- Fortführen des Bestimmens geometrischer Oberflächenprofile oder geometrischer und thermischer Oberflächenprofile des keramischen oder pulvermetallurgischen Bauteils (4) und der Kenngrößen ($K_i$), solange der Sinterungsprozess noch nicht abgeschlossen ist, und
- Abbrechen oder Verlangsamen des Sintervorganges bei einer Abweichung der gemessenen Werte der Kenngrößen ($K_i$) von vorbestimmten

Werten, die größer ist als ein zweiter vordefinierter Schwellenwert.

**11.** Verfahren nach einem der vorhergehenden Ansprüche, wobei ein Winkel zwischen Lichtquelle (2a) und Detektor (2b) konstant ist.

**12.** Vorrichtung zur kontrollierten Sinterung eines keramischen oder pulvermetallurgischen Bauteils (4), umfassend:

einen Hochtemperaturofen (5) mit einem motorgetriebenen Drehteller, in dem das keramische oder pulvermetallurgische Bauteil (4) auf dem Drehteller anordenbar und erhitzbar ist, eine Öffnung (1) in der Wandung des Ofens (5); eine Lichtquelle (2a); einen Detektor (2b) zur Erfassung des vom keramischen oder pulvermetallurgischen Bauteil gestreuten Lichtes der Lichtquelle (2a); und eine Auswerte- und Steuereinheit (9), wobei Lichtquelle (2a) und Detektor (2b) auf derselben Seite des keramischen oder pulvermetallurgischen Bauteils (4) angeordnet sind, sodass durch die Öffnung (1) das Oberflächenprofil mindestens eines Teilbereiches des keramischen oder pulvermetallurgischen Bauteils (4) auf Basis des von dem keramischen oder pulvermetallurgischen Bauteil (4) gestreuten Lichtes bestimmbar ist; Lichtquelle (2a) und Detektor (2b) durch einen Laserlichtschnittsensor (2) realisiert sind, sodass Laserlicht durch die Öffnung (1) des Hochtemperaturofens (5) auf einer der Lichtquelle zugewandten Oberfläche des keramischen oder pulvermetallurgischen Bauteils (4) als Linie abbildbar ist und das am keramischen oder pulvermetallurgischen Bauteil gestreute Laserlicht in dem Detektor (2b) detektierbar ist, sodass unmittelbar entlang dieser Linie das Oberflächenprofil durch die Auswerte- und Steuereinheit (9) bestimmbar ist.

**13.** Vorrichtung nach Anspruch 12, wobei nur genau eine Öffnung (1) in einer Wandung des Ofens (5) vorhanden ist, oberhalb derer der Laserlichtschnittsensor (2) angeordnet ist.

**14.** Vorrichtung nach Anspruch 12, ferner umfassend ein Mittel (8) zur Bestimmung eines thermischen Oberflächenprofils mindestens eines Teilbereiches des keramischen oder pulvermetallurgischen Bauteils (4) im Ofen (5).

**15.** Vorrichtung nach Anspruch 14, wobei die Auswerte- und Steuereinheit (9) zur Auswertung der bestimmten, d.h. der gemessenen geometrischen Daten oder zur Auswertung der bestimmten, d.h. der gemessenen geometrischen und thermischen Daten ausgebildet ist.

16. Vorrichtung nach Anspruch 15, wobei die Auswerte- und Steuereinheit (9) zur Steuerung von Sinterparametern auf Basis dieser Daten ausgebildet ist.

17. Vorrichtung nach Anspruch 16, wobei steuerbare Sinterparameter ausgewählt sind unter:
einer lokalen und einer globalen Temperatur im Ofen (5), einer globalen Heizrate im gesamten Ofen (5), einer lokalen Heizrate einzelner Heizzonen im Ofen (5), und einer Zeitdauer einzelner Sinterungsschritte.

18. Vorrichtung nach einem der vorhergehenden Vorrichtungsansprüche, wobei ein Winkel zwischen Lichtstrahl der Lichtquelle (2a) und optischer Achse des Lichtdetektors (2b) konstant ist.

19. Verwendung einer Vorrichtung nach einem der Ansprüche 12 bis 18 zur Erfassung eines Linienprofils während des kontrollierten Sinterns eines keramischen oder pulvermetallurgischen Bauteils (4).

**Claims**

1. A method for the controlled sintering of a ceramic or powder metallurgical component (4), comprising the following steps:

   - arranging the ceramic or powder metallurgical component (4) on a motor-driven rotary table in a high-temperature furnace (5);
   - heating the high-temperature furnace (5) and sintering the ceramic or powder metallurgical component in the high-temperature furnace (5);
   - rotating the ceramic or powder metallurgical component by means of the motor-driven rotary table;
   - creating a geometric surface profile of at least a subregion of the ceramic or powder metallurgical component (4) during the sintering of the ceramic or powder metallurgical component (4) rotated by means of the motor-driven rotary table, by:

       - irradiating the ceramic or powder metallurgical component (4) rotated by means of the motor-driven rotary table with light from a light source (2a); and
       - detecting the light scattered by the rotated ceramic or powder metallurgical component (4) by means of a detector (2b); and
       - determining the geometric surface profile from the detected light,

wherein the irradiation includes an expansion of a light beam of the light source (2a) so as to form a line, and the light source (2a) and the detector (2b) are designed as a light section sensor (2).

2. The method according to claim 1, wherein the expanded light beam is achieved by a laser light section sensor (2), so that the created geometric surface profile includes at least one line profile.

3. The method according to claim 1 or 2, further comprising the following step:

   - controlling the sintering parameters based on at least one created geometric surface profile of the ceramic or powder metallurgical component (4).

4. A method according to any one of the preceding claims, further comprising the following step:

   - creating a thermal surface profile of at least a subregion of the ceramic or powder metallurgical component (4) during the creation of the geometric surface profile.

5. The method according to claim 4, further comprising the following step:

   - controlling the sintering parameters based on the created geometric and/or thermal surface profile of the ceramic or powder metallurgical component (4).

6. A method according to any one of the preceding claims, wherein the creation of the thermal surface profile takes place by means of a radiation thermometer (8).

7. The method according to claim 3 or 5, wherein the sintering parameters are selected from:
a local and a global temperature in the high-temperature furnace (5), a global heating rate in the entire high-temperature furnace (5), a local heating rate of individual heating zones in the high-temperature furnace (5), and a duration of individual sintering steps.

8. A method according to any one of the preceding claims, wherein a control and evaluation unit (9) calculates the geometric and/or thermal surface profile of the ceramic or powder metallurgical component (4) from the determined geometric and/or thermal data.

9. A method according to any one of the preceding claims, wherein, between consecutive determinations of the geometric and/or thermal surface profile of at least a subregion of the ceramic or powder metallurgical component (4), changes between the surface profiles are determined, based on which sintering parameters are controlled.

10. A method according to any one of the preceding claims, further comprising:

- determining characteristics ($K_i$) for shape recognition and temperature distribution from the measured geometric and thermal surface profiles of the ceramic or powder metallurgical component (4);
- carrying out a target/actual comparison of the measured values of the characteristics ($K_i$) with predetermined values;
- correcting the sintering parameters when a deviation of the measured values of the characteristics ($K_i$) from predetermined values is greater than a first predefined threshold value ($\varepsilon_i$);
- continuing the determination of the geometric surface profiles, or geometric and thermal surface profiles, of the ceramic or powder metallurgical component (4) and of the characteristics ($K_i$) as long as the sintering process is not yet completed; and
- terminating or slowing down the sintering process in the event of a deviation of the measured values of the characteristics ($K_i$) from predetermined values which is greater than a second predefined threshold value

11. A method according to any one of the preceding claims, wherein an angle between the light source (2a) and the detector (2b) is constant.

12. A device for the controlled sintering of a ceramic or powder metallurgical component (4), comprising:

a high-temperature furnace (5) comprising a motor-driven rotary table in which the ceramic or powder metallurgical component (4) can be arranged on the rotary table and heated;
an opening (1) in the wall of the furnace (5);
a light source (2a);
a detector (2b) for detecting the light from the light source (2a) scattered by the ceramic or powder metallurgical component; and
an evaluation and control unit (9),
wherein
the light source (2a) and the detector (2b) are arranged on the same side of the ceramic or powder metallurgical component (4) so that the surface profile of at least a subregion of the ceramic or powder metallurgical component (4) can be determined through the opening (1) based on the light scattered by the ceramic or powder metallurgical component (4);
the light source (2a) and the detector (2b) are implemented by a laser light section sensor (2), so that laser light can be imaged through the opening (1) of the high-temperature furnace (5) onto a surface of the ceramic or powder metallurgical component (4) facing the light source in the form of a line, and the laser light scattered by the ceramic or powder metallurgical component can be detected in the detector (2b), so that the surface profile can be determined by the evaluation and control unit (9) directly along this line.

13. The device according to claim 12, wherein only exactly one opening (1) in a wall of the furnace (5) is present, above which the laser light section sensor (2) is arranged.

14. The device according to claim 12, further comprising a means (8) for determining a thermal surface profile of at least a subregion of the ceramic or powder metallurgical component (4) in the furnace (5).

15. The device according to claim 14, wherein the evaluation and control unit (9) is designed to evaluate the determined, i.e. the measured, geometric data, or to evaluate the determined, i.e. the measured, geometric and thermal data.

16. The device according to claim 15, wherein the evaluation and control unit (9) is designed to control sintering parameters based on this data.

17. The device according to claim 16, wherein controllable sintering parameters are selected from:
a local and a global temperature in the furnace (5), a global heating rate in the entire furnace (5), a local heating rate of individual heating zones in the furnace (5), and a duration of individual sintering steps.

18. A device according to any one of the preceding device claims, wherein an angle between a light beam of the light source (2a) and an optical axis of the detector (2b) is constant.

19. Use of a method according to any one of claims 12 to 18 for detecting a line profile during the controlled sintering of a ceramic or powder metallurgical component (4).

**Revendications**

1. Procédé pour le frittage contrôlé d'un élément céramique ou produit par la métallurgie des poudres (4), comprenant les étapes :

- de disposition de l'élément céramique ou produit par la métallurgie des poudres (4) sur un plateau tournant motorisé dans un four à haute température (5) ;
- de chauffage du four à haute température (5) et de frittage de l'élément céramique ou produit par la métallurgie des poudres dans le four à haute température (5) ;
- d'amenée en rotation de l'élément céramique ou produit par la métallurgie des poudres au moyen du plateau tournant motorisé ;
- de réglage d'un profil surfacique géométrique d'au moins une zone partielle de l'élément céramique ou produit par la métallurgie des poudres (4) pendant le frittage de l'élément céramique ou produit par la métallurgie des poudres (4) amené en rotation au moyen du plateau tournant motorisé par :

- irradiation de l'élément céramique ou produit par la métallurgie des poudres (4) amené en rotation au moyen du plateau tournant motorisé par la lumière d'une source de lumière (2a) ;
et
- détection de la lumière diffusée par l'élément céramique ou produit par la métallurgie des poudres (4) amené en rotation au moyen d'un détecteur (2b) ;
et

- détermination du profil surfacique géométrique à partir de la lumière détectée,

dans lequel l'irradiation comporte un élargissement d'un faisceau lumineux de la source de lumière (2a) en une ligne et la source de lumière (2a) et le détecteur (2b) sont réalisés sous la forme d'un capteur de coupe optique (2).

2. Procédé selon la revendication 1, dans lequel le faisceau lumineux élargi est réalisé par un capteur de coupe optique laser (2), de sorte que le profil surfacique géométrique réglé comporte au moins un profil linéaire.

3. Procédé selon la revendication 1 ou 2, comportant en outre l'étape :

- de commande des paramètres de frittage en fonction d'au moins un profil surfacique géométrique réglé de l'élément céramique ou produit par la métallurgie des poudres (4).

4. Procédé selon l'une quelconque des revendications précédentes, comportant en outre l'étape :

- de réglage d'un profil surfacique thermique d'au moins une zone partielle de l'élément céramique ou produit par la métallurgie des poudres (4) pendant le réglage du profil surfacique géométrique.

5. Procédé selon la revendication 4, comportant en outre l'étape :

- de commande des paramètres de frittage en fonction des profils surfaciques géométriques et/ou thermiques réglés de l'élément céramique ou produit par la métallurgie des poudres (4) .

6. Procédé selon l'une quelconque des revendications précédentes, dans lequel le réglage du profil surfacique thermique est effectué au moyen d'un thermomètre à rayonnement (8) .

7. Procédé selon la revendication 3 ou 5, dans lequel les paramètres de frittage sont sélectionnés parmi : une température locale et globale dans le four à haute température (5), une vitesse de chauffage globale dans l'ensemble du four à haute température (5), une vitesse de chauffage locale des différentes zones de chauffage dans le four à haute température (5) et une durée des différentes étapes de frittage.

8. Procédé selon l'une quelconque des revendications précédentes, dans lequel une unité de commande et d'évaluation (9) calcule le profil surfacique géométrique et/ou thermique de l'élément céramique ou produit par la métallurgie des poudres (4) à partir des données géométriques et/ou thermiques déterminées.

9. Procédé selon l'une quelconque des revendications précédentes, dans lequel des modifications, sur la base desquelles des paramètres de frittage sont commandés, entre les profils surfaciques sont déterminées entre les déterminations successives du profil surfacique géométrique et/ou thermique d'au moins une zone partielle de l'élément céramique ou produit par la métallurgie des poudres (4).

10. Procédé selon l'une quelconque des revendications précédentes, comprenant en outre :

- la détermination de caractéristiques ($K_i$) pour la reconnaissance de forme et la répartition de température à partir des profils surfaciques géométriques et thermiques mesurés de l'élément céramique ou produit par la métallurgie des poudres (4),
- l'exécution d'une comparaison entre valeur de consigne/valeur réelle des valeurs mesurées des caractéristiques ($K_i$) par rapport à des valeurs prédéterminées ;
- la correction des paramètres de frittage, lorsqu'un écart des valeurs mesurées des caractéristiques ($K_i$) par rapport aux valeurs prédéterminées est supérieur à une première valeur de seuil prédéterminée ($\varepsilon_i$) :

- la continuité de la détermination des profils surfaciques géométriques ou des profils surfaciques géométriques et thermiques de l'élément céramique ou produit par la métallurgie des poudres (4) et des caractéristiques ($K_i$), tant que le processus de frittage n'est pas terminé, et

- l'interruption ou le ralentissement du processus de frittage dans le cas d'un écart des valeurs mesurées des caractéristiques ($K_i$) par rapport aux valeurs prédéterminées, qui est supérieur à une deuxième valeur de seuil prédéterminée.

11. Procédé selon l'une quelconque des revendications précédentes, dans lequel un angle entre la source de lumière (2a) et le détecteur (2b) est constant.

12. Dispositif pour le frittage contrôlé d'un élément céramique ou produit par la métallurgie des poudres (4), comportant :

un four à haute température (5) pourvu d'un plateau tournant motorisé, dans lequel l'élément céramique ou produit par la métallurgie des poudres (4) peut être disposé sur le plateau tournant et chauffé,
une ouverture (1) dans la paroi du four (5) ;
une source de lumière (2a) ;
un détecteur (2b) pour détecter la lumière de la source de lumière (2a) diffusée par l'élément céramique ou produit par la métallurgie des poudres (4) ; et
une unité d'évaluation et de commande (9), dans lequel
la source de lumière (2a) et le détecteur (2b) sont disposés sur le même côté de l'élément céramique ou produit par la métallurgie des poudres (4), de sorte que le profil surfacique d'au moins une zone partielle de l'élément céramique ou produit par la métallurgie des poudres (4) peut être déterminé par l'ouverture (1) en fonction de la lumière diffusée par l'élément céramique ou produit par la métallurgie des poudres (4) ;
la source de lumière (2a) et le détecteur (2b) sont réalisés par un capteur de coupe optique laser (2), de sorte que la lumière laser peut être projetée à travers l'ouverture (1) du four à haute température (5) sur une surface de l'élément céramique ou produit par la métallurgie des poudres (4) tournée vers la source de lumière et que la lumière laser diffusée sur l'élément céramique ou produit par la métallurgie des poudres (4) peut être détectée dans le détecteur (2b), de sorte que le profil surfacique peut être déterminé directement le long de cette ligne par l'unité d'évaluation et de commande (9).

13. Dispositif selon la revendication 12, dans lequel une seule ouverture (1) dans une paroi du four (5) est présente, au-dessus de laquelle est disposé le capteur de coupe optique laser (2).

14. Dispositif selon la revendication 12, comprenant en outre un moyen (8) pour déterminer un profil surfacique thermique au moins d'une zone partielle de l'élément céramique ou produit par la métallurgie des poudres (4) dans le four (5).

15. Dispositif selon la revendication 14, dans lequel l'unité d'évaluation et de commande (9) est conçue pour évaluer les données géométriques déterminées, c'est-à-dire les données géométriques mesurées ou pour évaluer les données géométriques et thermiques déterminées, c'est-à-dire mesurées.

16. Dispositif selon la revendication 15, dans lequel l'unité d'évaluation et de commande (9) est conçue pour commander les paramètres de frittage en fonction de ces données.

17. Dispositif selon la revendication 16, dans lequel les paramètres de frittage pouvant être commandés sont sélectionnés parmi : une température locale et une température globale dans le four (5), une vitesse de chauffage globale dans l'ensemble du four (5), une vitesse de chauffage locale des différentes zones de chauffage dans le four (5), et une durée des différentes étapes de frittage.

18. Dispositif selon l'une quelconque des revendications précédentes du dispositif, dans lequel un angle entre le faisceau lumineux de la source de lumière (2a) et l'axe optique du détecteur de lumière (2b) est constant.

19. Utilisation d'un dispositif selon l'une quelconque des revendications 12 à 18 pour détecter un profil linéaire pendant le frittage contrôlé d'un élément céramique ou produit par la métallurgie des poudres (4).

Fig. 1:

Fig. 2:

Fig. 3:

Fig. 4:

Fig. 5a:

102b

104

direktes
Licht

102a

Fig.5b:

105

Fig.6a:

104

gestreutes
Licht

102a          102b

Fig.6b:

**105**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4588297 A
- JP 2001099615 A
- US 5270560 A
- DE 19504126 A1

**In der Beschreibung aufgeführte Nicht-Patentliteratur**

- **F. RAETHER ; R. SPRINGER ; S.BEYER.** Optical dilatometry for the control of microstructure development during sintering. *Mat Res Innovat,* 2001, vol. 4, 245-250